# EUROPEAN PATENT SPECIFICATION

(11) **EP 4 230 487 B1**
(45) Date of publication and mention of the grant of the patent: **20.11.2024**
(21) Application number: 23153901.6
(22) Date of filing: 30.01.2023
(51) Int. Cl.: B60T 13/74

(54) **BRAKING DEVICE AND SPARE BRAKE CONTROL DEVICE**
BREMSVORRICHTUNG UND RESERVEBREMSSTEUERUNGSVORRICHTUNG
DISPOSITIF DE FREINAGE ET DISPOSITIF DE COMMANDE DE FREIN DE SECOURS

(30) Priority: 18.02.2022 JP 2022024072
(43) Date of publication of application: 23.08.2023
(73) Proprietor: Nabtesco Corporation, Tokyo 102-0093 (JP)
(72) Inventor: Sagawa, Takanori, Chiyoda-ku, Tokyo, 102-0093 (JP); Utsumi, Takashi, Chiyoda-ku, Tokyo, 102-0093 (JP); Ohno, Tomoya, Chiyoda-ku, Tokyo, 102-0093 (JP); Kigami, Shogo, Chiyoda-ku, Tokyo, 102-0093 (JP)
(74) Representative: Grünecker Patent- und Rechtsanwälte PartG mbB

(56) References cited:
- DE-A1- 19 611 910
- DE-T2- 68 902 940
- US-A- 6 012 556
- US-A- 6 138 801
- US-A1- 2013 270 047

## Description

The present invention relates to a braking technology for railroad vehicles.

Patent Literature 1 discloses an electric brake actuator including a service brake mechanism unit that uses rotational power of a motor to drive a push rod equipped with a friction material that is pressed against a wheel of a railroad vehicle, and a spare brake mechanism unit that uses spring force to move the push rod. In Patent Literature 1, when the service brake mechanism unit cannot operate due to a power failure or the like, the spare brake mechanism unit activates the spare brake by means of the push rod that is moved by the force of a pressurized spring, so as to safely stop the railroad vehicle. Then, after recovery from the power failure, the service brake mechanism unit is operated such as to generate the maximum brake force, and the spring is pressurized again by means of the reaction force.

Patent Literature 1: Japanese Translation of PCT International Application Publication No. 2001-521468

US 6 138 801 A relates to an electrically operated brake system for a rail vehicle, wherein each wheel of the vehicle may be braked using one or two motors, each operating a braking mechanism. The motors are powered by respective batteries.

In the technology described in Patent Literature 1, when the service brake mechanism unit cannot be operated, the spare brake activated by the spring cannot be released. Accordingly, a worker who goes to the site needs to manually return the push rod in the direction of pressurizing the spring, for example, to release the spare brake.

The present invention has been made in view of such a situation, and a purpose thereof is to provide a braking device and the like that can reduce the workload related to the operation of a spare brake when a service brake cannot be used.

In response to the above issue, a braking device according to the present invention is defined by the independent claim. The dependent claims describe advantageous embodiments.

According to this aspect, even when the regular electric motor and/or the regular power supply cannot be used, the spare brake can be operated with the spare electric motor and the spare power supply.

Another aspect relates to a spare brake control device. The spare brake control device includes: a spare power supply that is different from a regular power supply; a spare electric motor that drives a friction material, which is pressed against a braking target member of a railroad vehicle to brake the railroad vehicle, based on electricity supplied from the spare power supply and that is different from a regular electric motor; and an electricity supply controller that controls supply of electricity from the spare power supply to the spare electric motor in response to a spare brake command.

Optional combinations of the aforementioned constituting elements, and implementation of the present invention in the form of methods, apparatuses, systems, recording media, and computer programs may also be practiced as additional modes of the present invention.

The present invention reduces the workload related to the operation of a spare brake when a service brake cannot be used.

Embodiments will now be described, by way of example only, with reference to the accompanying drawings which are meant to be exemplary, not limiting, and wherein like elements are numbered alike in several Figures, in which:
FIG. 1 schematically illustrates a configuration of a braking device according to a first embodiment;
FIG. 2 schematically illustrates the details of a relay circuit;
FIG. 3 shows combinations of a spare brake action command and a spare brake release command from a vehicle cab;
FIG. 4 schematically illustrates a configuration of the braking device according to a second embodiment;
FIG. 5 schematically illustrates a configuration of the braking device according to a third embodiment; and
FIG. 6 schematically illustrates a configuration of the braking device according to a fourth embodiment.

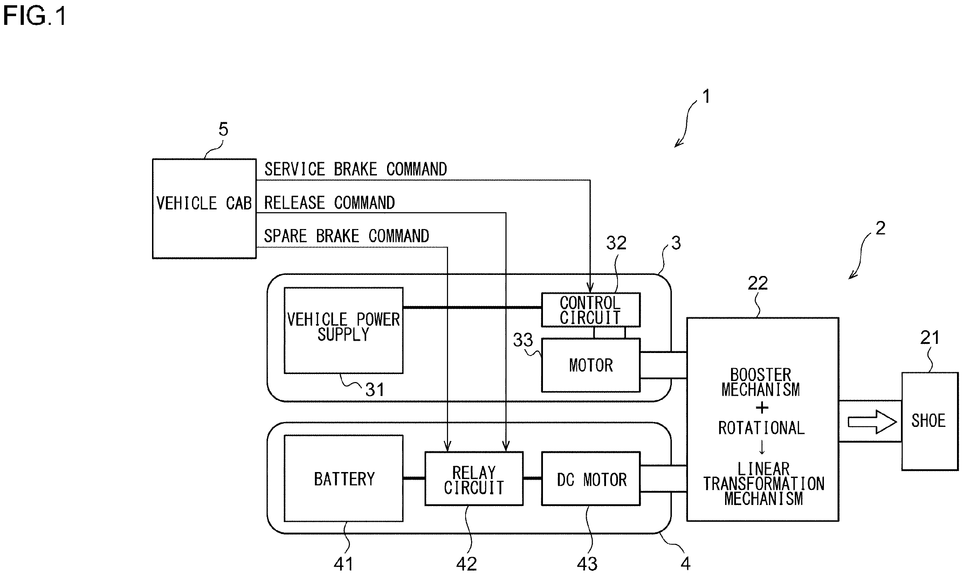

FIG. 1 schematically illustrates a configuration of a braking device 1 according to a first embodiment. The braking device 1 includes a brake mechanism 2, a service brake unit 3, and a spare brake unit 4 as a spare brake control device. The spare brake is sometimes referred to as a security brake, a backup brake, or an emergency brake. The service brake unit 3 and the spare brake unit 4 are controlled by commands from a brake command unit or a control unit 5.

The brake mechanism 2, which constitutes a tread brake, includes a shoe 21 as a friction material that is pressed against a wheel, which is a braking target member in a railroad vehicle, to brake the railroad vehicle. The shoe 21 faces at least part of the outer circumference of the wheel, and, on the facing surface (inner circumference surface), brake lining or the like is provided. As will be described later, the shoe 21 is driven in a radial direction of the wheel by the service brake unit 3 or the spare brake unit 4 and, when the shoe 21 reaches a brake action position where it comes into contact with the wheel and is then pressed, the frictional force between the brake lining or the like and the wheel slows the rotation of the wheel to brake the railroad vehicle.

The brake mechanism 2 may also be configured as a disc brake, and pads may be provided as the friction material instead of the shoe 21 used in a tread brake. The pads sandwich a brake disc, which rotates integrally with a wheel, from both sides in a rotational axis direction, and, on the surface of each pad that faces the brake disc, brake lining or the like is provided. The pads are driven in the rotational axis directions of the wheel by the service brake unit 3 or the spare brake unit 4 and, when the pads reach the brake action position where the pads come into contact with the brake disc from both sides and are then pressed, the frictional force between the brake lining or the like and the brake disc slows the rotation of the wheel to brake the railroad vehicle. The brake mechanism 2 may also be configured as any other arbitrary type of brake, such as a drum brake.

The brake mechanism 2 further includes a power transmission mechanism 22 connected to the service brake unit 3 and the spare brake unit 4. When the service brake unit 3 is functioning, the power transmission mechanism 22 transmits the power of the service brake unit 3 to the shoe 21, and, when the service brake unit 3 is not functioning, the power transmission mechanism 22 transmits the power of the spare brake unit 4 to the shoe 21. Thus, the power transmission mechanism 22 preferentially transmits the power of the service brake unit 3 to the shoe 21 and transmits, only when the service brake unit 3 is not functioning, the power of the spare brake unit 4 to the shoe 21. The power transmission mechanism 22 may be configured by a combination of publicly-known mechanical elements, such as a clutch and Torque Diode (trademark). The power transmission mechanism 22 may be equipped with a booster mechanism, such as a toggle mechanism, that amplifies rotational power generated by the motors of the service brake unit 3 and the spare brake unit 4, and a reduction mechanism that obtains torque corresponding to the reduction ratio of the rotational power. The power transmission mechanism 22 also includes a rotational-linear transformation mechanism that transforms the rotational power generated by the motors of the service brake unit 3 and the spare brake unit 4 into linear power used to drive the shoe 21 in the radial direction.

The service brake unit 3 includes a vehicle power supply 31 as a regular power supply, a control circuit 32, and a motor 33 as a regular electric motor. The vehicle power supply 31 may be provided outside the service brake unit 3 or even outside the braking device 1. The vehicle power supply 31 may supply the control circuit 32 with electricity supplied from a pantograph to the railroad vehicle. The vehicle power supply 31 mounted on at least one railroad vehicle supplies alternating-current (AC) or direct-current (DC) electricity supplied through a train line, such as an overhead train line (overhead line) and a power feed rail (third rail), to various equipment and devices of the railroad vehicle, including the control circuit 32 and the motor 33. The control circuit 32 includes an inverter for generating multiphase AC electricity of desired frequency and amplitude based on the electricity supplied from the vehicle power supply 31, so as to generate AC electricity, such as three-phase AC electricity, to be applied to the motor 33 in response to a service brake command from the vehicle cab as the control unit 5. The motor 33 as the regular electric motor is an AC motor, which drives the shoe 21 based on the AC electricity generated by the control circuit 32 in response to a service brake command from the control unit 5.

The service brake commands from the vehicle cab as the control unit 5 are broadly classified into a service brake action command issued to drive the shoe 21 to the brake action position where the shoe 21 is pressed against the wheel, and a service brake release command issued to drive the shoe 21 to a brake release position where the shoe 21 is not pressed against the wheel. When the service brake action command is given by the control unit 5, the control circuit 32 rotates the rotor of the motor 33 in a first direction (hereinafter, also referred to as an action direction or a normal rotation direction) to generate a first alternating current (hereinafter, also referred to as an action alternating current or a normal rotation alternating current) to drive the shoe 21 to the brake action position. Also, when the service brake release command is given by the control unit 5, the control circuit 32 rotates the rotor of the motor 33 in a second direction (hereinafter, also referred to as a release direction or a reverse rotation direction), which is opposite to the first direction, to generate a second alternating current (hereinafter, also referred to as a release alternating current or a reverse rotation alternating current) to drive the shoe 21 to the brake release position.

When the service brake unit 3 is functioning properly, i.e., when all of the vehicle power supply 31, the control circuit 32, and the motor 33 are functioning properly, the control of action and release of the brake, i.e., driving of the shoe 21 between the brake action position and the brake release position, is performed by the service brake unit 3. On the other hand, when the service brake unit 3 is not functioning properly, i.e., when at least one of the vehicle power supply 31, the control circuit 32, or the motor 33 is not functioning properly, the control of action and release of the brake, i.e., driving of the shoe 21 between the brake action position and the brake release position, is performed by the spare brake unit 4.

The spare brake unit 4 constitutes a spare brake drive device that drives, when the service brake unit 3 is unable to drive the shoe 21 placed at the brake action position to the brake release position, the shoe 21 to the brake release position in response to a spare brake release command (shown as "RELEASE COMMAND" in FIG. 1) from the control unit 5. More specifically, when the service brake unit 3 is not functioning, the spare brake unit 4 drives the shoe 21 between the brake action position and the brake release position, based on DC electricity supplied from a battery 41 as a spare power supply. The spare brake unit 4 includes the battery 41, a relay circuit 42 as an electricity supply controller, and a DC motor 43 as a spare electric motor and a DC electric motor.

The battery 41, different from the vehicle power supply 31, supplies DC electricity. The relay circuit 42 supplies the DC electricity from the battery 41 to the DC motor 43, in response to a spare brake command as a spare brake action command and a spare brake release command from the control unit 5. The DC motor 43 drives the shoe 21 between the brake action position and the brake release position, based on the DC electricity supplied from the battery 41 via the relay circuit 42. The DC motor 43 may be constituted by an inverter that converts the DC electricity supplied from the relay circuit 42 into AC electricity, and by an electric motor, similar to the regular electric motor (motor 33), that generates rotational power based on the AC electricity converted by the inverter.

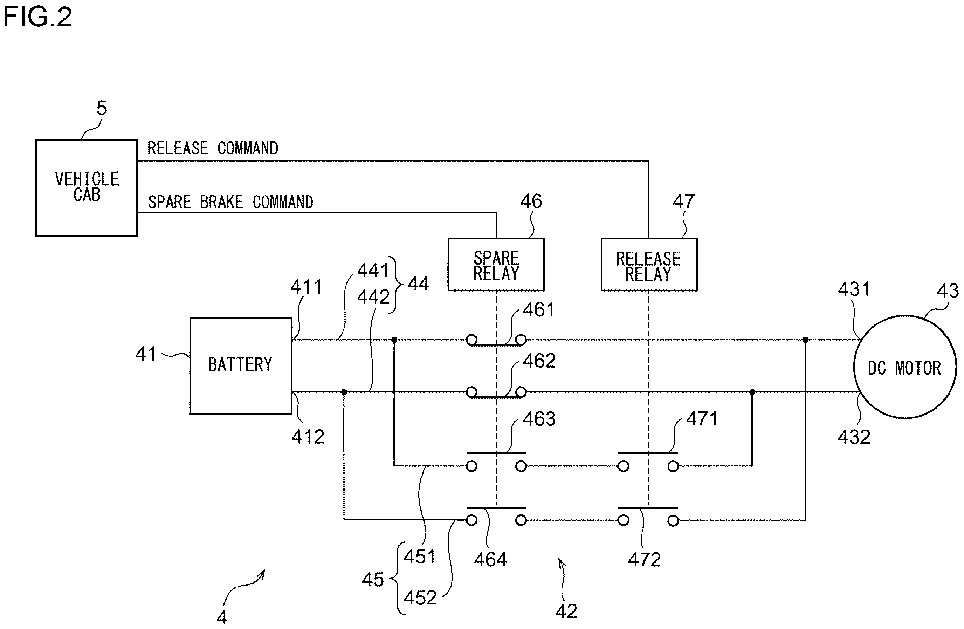

FIG. 2 schematically illustrates the details of the relay circuit 42. In the relay circuit 42, a first path 44 and a second path 45, which each connect the battery 41 and the DC motor 43, are provided in parallel. The first path 44 includes a high potential line 441 connected to a high potential terminal 411 of the battery 41, and a low potential line 442 connected to a low potential terminal 412 of the battery 41. The high potential line 441 is also connected to a first terminal 431 of the DC motor 43 via a spare brake action switch 461, which will be described later, and the low potential line 442 is also connected to a second terminal 432 of the DC motor 43 via a spare brake action switch 462, which will also be described later.

The second path 45, which connects the battery 41 and the DC motor 43 in parallel with the first path 44, includes a first parallel line 451 that is connected to the high potential line 441 on the battery 41 side with respect to the spare brake action switch 461, an auxiliary switch 463, and a spare brake release switch 471, which will be described later, and that is also connected to the second terminal 432 of the DC motor 43 with respect to the spare brake action switch 461, the auxiliary switch 463, and the spare brake release switch 471. The second path 45 also includes a second parallel line 452 that is connected to the low potential line 442 on the battery 41 side with respect to the spare brake action switch 462, an auxiliary switch 464, and a spare brake release switch 472, which will be described later, and that is also connected to the first terminal 431 of the DC motor 43 with respect to the spare brake action switch 462, the auxiliary switch 464, and the spare brake release switch 472. Thus, the first parallel line 451 and the second parallel line 452 are connected to the high potential line 441 and the low potential line 442 such as to cross each other.

Each of the first path 44 and the second path 45 conducts electricity and hence supplies DC electricity to the DC motor 43 when all the switches provided on the path are closed. As will be described later, the first path 44 and the second path 45 do not conduct electricity simultaneously. More specifically, when the spare brake action switches 461 and 462 are closed, the first path 44 conducts electricity, so that the high potential terminal 411 of the battery 41 is connected to the first terminal 431 of the DC motor 43 via the high potential line 441, and the low potential terminal 412 of the battery 41 is connected to the second terminal 432 of the DC motor 43 via the low potential line 442. At the time, in the DC motor 43, a direct current flows in the first direction from the first terminal 431 of high potential toward the second terminal 432 of low potential, and the rotor of the DC motor 43 rotates in the first direction (or action direction or normal rotation direction), so that the shoe 21 is driven to the brake action position.

Meanwhile, when the auxiliary switches 463 and 464 and the spare brake release switches 471 and 472 are closed, the second path 45 conducts electricity, so that the high potential terminal 411 of the battery 41 is connected to the second terminal 432 of the DC motor 43 via the first parallel line 451, and the low potential terminal 412 of the battery 41 is connected to the first terminal 431 of the DC motor 43 via the second parallel line 452. At the time, in the DC motor 43, a direct current flows in the second direction (opposite to the first direction) from the second terminal 432 of high potential toward the first terminal 431 of low potential, and the rotor of the DC motor 43 rotates in the second direction (or release direction or reverse rotation direction), so that the shoe 21 is driven to the brake release position.

A spare relay 46, which is controlled by a spare brake command as a spare brake action command from the vehicle cab as the control unit 5, includes the spare brake action switch 461 provided on the high potential line 441, the spare brake action switch 462 provided on the low potential line 442, the auxiliary switch 463 provided on the first parallel line 451, and the auxiliary switch 464 provided on the second parallel line 452. These four switches 461-464 are mechanically connected and are biased upward in FIG. 2 by springs or the like. When the spare brake command is given by the vehicle cab, the switches 461-464 are not pressurized downward, so that, by the upward biasing force, the spare brake action switches 461 and 462 are closed, and the auxiliary switches 463 and 464 are opened. When the spare brake command is not given by the vehicle cab, on the other hand, the switches 461-464 are pressurized downward, so that the spare brake action switches 461 and 462 are opened, and the auxiliary switches 463 and 464 are closed. Thus, the spare brake action switches 461 and 462 and the auxiliary switches 463 and 464 are opened and closed to complement each other, based on whether or not the spare brake command is given.

Accordingly, while the first path 44 conducts electricity, since the spare brake action switches 461 and 462 are closed whereas the auxiliary switches 463 and 464 are open, the second path 45 cannot conduct electricity. Similarly, while the second path 45 conducts electricity, since the auxiliary switches 463 and 464 are closed whereas the spare brake action switches 461 and 462 are open, the first path 44 cannot conduct electricity. Therefore, the first path 44 and the second path 45 do not conduct electricity simultaneously, thereby effectively preventing the conflict between the action of the spare brake implemented by the conduction of the first path 44 and the release of the spare brake implemented by the conduction of the second path 45.

A release relay 47, which is controlled by a spare brake release command (shown as "RELEASE COMMAND" in FIG. 2) from the vehicle cab as the control unit 5, includes the spare brake release switch 471 provided in series with the auxiliary switch 463 on the first parallel line 451, and the spare brake release switch 472 provided in series with the auxiliary switch 464 on the second parallel line 452. These two switches 471 and 472 are mechanically connected and are biased upward in FIG. 2 by springs or the like. When the spare brake release command is given by the vehicle cab, the switches 471 and 472 are pressurized downward and closed. When the spare brake release command is not given by the vehicle cab, on the other hand, the switches 471 and 472 are not pressurized downward and hence opened by the upward biasing force.

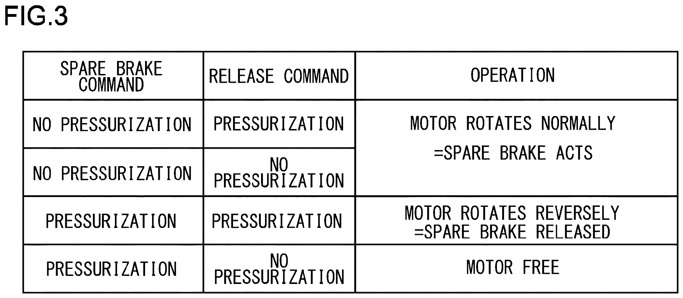

FIG. 3 shows combinations of the spare brake command and the spare brake release command from the vehicle cab. In the case of "no pressurization" in which the spare brake command is given by the vehicle cab, the spare brake action switches 461 and 462 are closed, which makes the first path 44 conduct electricity, and the auxiliary switches 463 and 464 are opened, which does not make the second path 45 conduct electricity; therefore, regardless of whether or not the spare brake release command is given (pressurization or no pressurization), the DC motor 43 rotates normally, and the shoe 21 is driven to the brake action position. In short, when the spare brake command is given from the vehicle cab, the spare brake acts regardless of whether or not the spare brake release command is given.

In the case of "pressurization" in which the spare brake command is not given by the vehicle cab and, in addition, in the case of "pressurization" in which the spare brake release command is given by the vehicle cab, the auxiliary switches 463 and 464 and the spare brake release switches 471 and 472 are closed, which makes the second path 45 conduct electricity, and the spare brake action switches 461 and 462 are opened, which does not make the first path 44 conduct electricity; therefore, the DC motor 43 rotates reversely, and the shoe 21 is driven to the brake release position. In this way, when the spare brake release switches 471 and 472 are closed in response to the spare brake release command "pressurization" and also in the case of "pressurization" in which the spare brake command is not given to the spare brake action switches 461 and 462, a direct current in the second direction (or release direction or reverse rotation direction) is applied to the DC motor 43 to drive the shoe 21 to the brake release position.

In the case of "pressurization" in which the spare brake command is not given by the vehicle cab and, in addition, in the case of "no pressurization" in which the spare brake release command is not given by the vehicle cab, the spare brake action switches 461 and 462 are opened, which does not make the first path 44 conduct electricity, and the spare brake release switches 471 and 472 are opened, which does not make the second path 45 conduct electricity; therefore, the state is placed in a "motor free" state in which the DC electricity from the battery 41 is not supplied to the DC motor 43. This combination of the spare brake command "pressurization" and the spare brake release command "no pressurization" is set when the service brake unit 3 is functioning properly and there is no need to use the spare brake unit 4. Thus, when the service brake unit 3 is functioning, the spare brake action switches 461 and 462 are not given the spare brake command and are open (pressurization), and the spare brake release switches 471 and 472 are not given the spare brake release command and are open (no pressurization).

According to the first embodiment described above, a brake, which has conventionally needed to be manually released in the event of loss of a regular power supply, for example, can be easily released, with a simple configuration including the relay circuit 42 constituted by switches, the DC motor 43, and the like. In order to prevent abnormalities caused in the service brake unit 3 from affecting the spare brake unit 4, it is preferable to configure the service brake unit 3 and the spare brake unit 4 with different circuit boards and to house them in different casings.

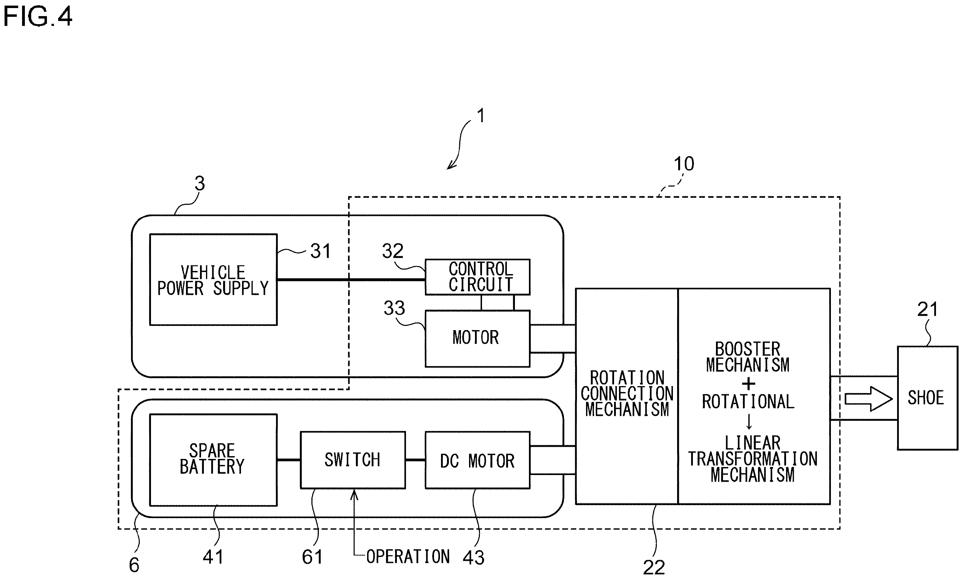

FIG. 4 schematically illustrates a configuration of the braking device 1 according to a second embodiment. Constituting elements similar to those in the first embodiment, as shown in FIG. 1 and the like, will be denoted by the same reference characters, and repetitive description will be omitted. The braking device 1 includes the brake mechanism 2, the service brake unit 3, and a brake release device 6 as a spare brake unit.

The power transmission mechanism 22 of the brake mechanism 2 is connected to the service brake unit 3 and the brake release device 6. When the service brake unit 3 is functioning, the power transmission mechanism 22 transmits the power of the service brake unit 3 to the shoe 21, and, when the service brake unit 3 is not functioning, the power transmission mechanism 22 transmits the power of the brake release device 6 to the shoe 21.

When the service brake unit 3 is functioning properly, the control of action and release of the brake is performed by the service brake unit 3. When the service brake unit 3 is not functioning properly, on the other hand, the control of release of the brake, i.e., the driving of the shoe 21 from the brake action position to the brake release position, is performed by the brake release device 6.

The brake release device 6 constitutes a spare brake unit that drives, when the service brake unit 3 is unable to drive the shoe 21 placed at the brake action position to the brake release position, the shoe 21 to the brake release position in response to a brake release command (shown as "OPERATION" in FIG. 4). More specifically, when the service brake unit 3 is not functioning, the brake release device 6 drives the shoe 21 from the brake action position to the brake release position, based on the DC electricity supplied from the battery 41. The brake release device 6 includes the battery 41, a switch 61 as an electricity supply controller, and the DC motor 43.

The switch 61 supplies the DC electricity from the battery 41 to the DC motor 43, in response to a brake release command based on operation performed by a crew member, for example, in the vehicle cab or other places. More specifically, the switch 61 to which the brake release command is given is closed, which supplies the DC electricity from the battery 41 to the DC motor 43; on the other hand, the switch 61 to which the brake release command is not given is open, which does not supply the DC electricity from the battery 41 to the DC motor 43. The DC motor 43 drives the shoe 21 from the brake action position to the brake release position, based on a direct current in the second direction (or release direction or reverse rotation direction) supplied from the battery 41 via the switch 61.

According to the second embodiment described above, a brake, which has conventionally needed to be manually released in the event of loss of a regular power supply, for example, can be easily released, with a simple configuration including the switch 61, the DC motor 43, and the like. In order to prevent abnormalities caused in the service brake unit 3 from affecting the brake release device 6 as a spare brake unit, it is preferable to configure the service brake unit 3 and the brake release device 6 with different circuit boards and to house them in different casings.

In the second embodiment described above, a portion 10 enclosed by a dotted line constitutes an independent braking unit. More specifically, the braking unit 10 includes the power transmission mechanism 22 of the brake mechanism 2, the control circuit 32 and the motor 33 of the service brake unit 3, and the entire brake release device 6. By attaching the shoe 21 and the vehicle power supply 31 to the braking unit 10, the braking device 1 shown in FIG. 4 can be configured.

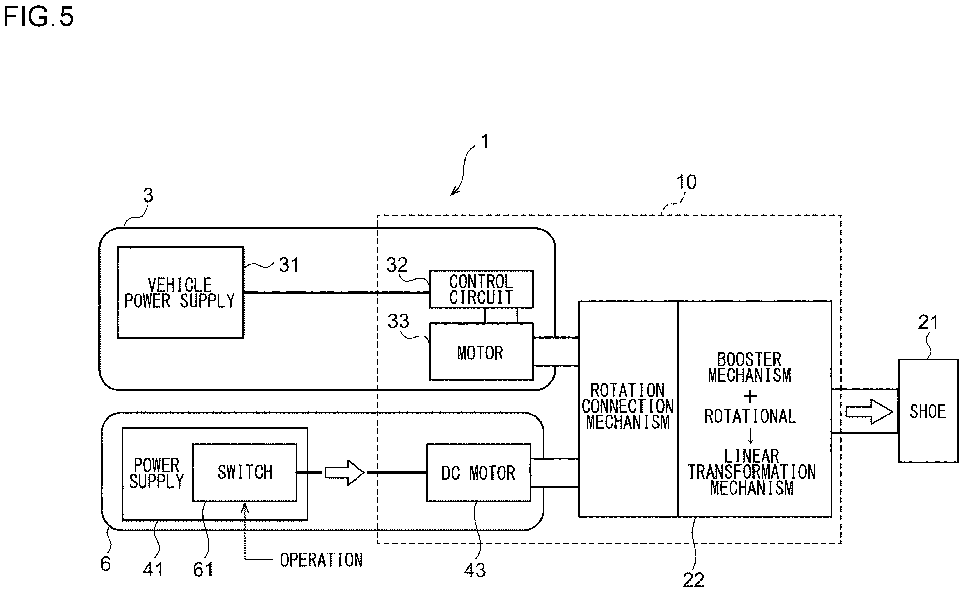

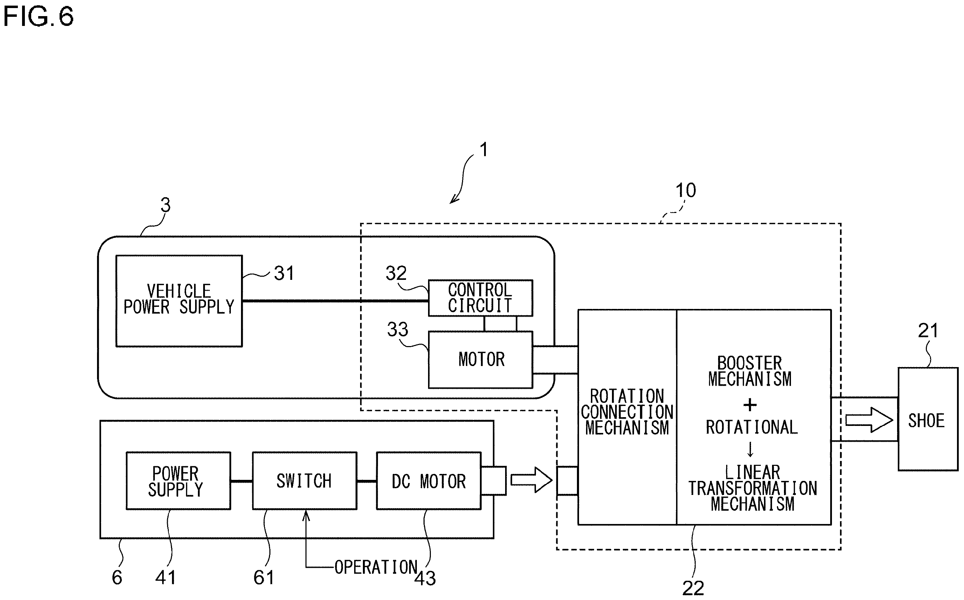

In a third embodiment shown in FIG. 5, the braking unit 10 only includes the DC motor 43, instead of the entire brake release device 6. The battery 41 and the switch 61 as an electricity supply controller of the brake release device 6 are integrally provided as a power supply switch unit, which is attachable to and detachable from the braking unit 10 provided with the DC motor 43 as a spare electric motor. Thus, by making at least part of the brake release device 6 as a spare brake unit attachable to and detachable from the braking unit 10, the remaining portion (power supply switch unit) of the brake release device 6 may be attached to the braking unit 10 only when the brake release device 6 needs to be used, i.e., when the service brake unit 3 is not functioning and the brake needs to be released by the brake release device 6. By configuring the power supply switch unit separately from the braking unit 10, a single power supply switch unit can be shared among multiple braking units 10. As in a fourth embodiment shown in FIG. 6, the entire brake release device 6 as a spare brake unit may be made attachable to and detachable from the braking unit 10.

The present invention has been described with reference to embodiments. The embodiments are intended to be illustrative only, and it will be obvious to those skilled in the art that various modifications to a combination of constituting elements or processes could be developed and that such modifications may fall within the scope of the present invention, which is defined by the independent claim.

The functional configuration of each device described in the embodiments can be implemented by hardware resources, software resources, or cooperation between hardware resources and software resources. As the hardware resources, processors, ROMs, RAMs, or other LSIs can be employed. As the software resources, programs, such as operating system programs and application programs, can be employed.

In the embodiments disclosed in the present specification, when multiple functions are provided in a distributed manner, some or all of the multiple functions may be collectively provided, and, conversely, when multiple functions are collectively provided, some or all of the multiple functions may be provided in a distributed manner. Regardless of whether the functions are aggregated or distributed, configurations have only to be made such that a purpose of the invention can be achieved.

- 1: braking device
- 2: brake mechanism
- 3: service brake unit
- 4: spare brake unit
- 5: control unit
- 6: brake release device
- 10: braking unit
- 21: shoe
- 22: power transmission mechanism
- 31: vehicle power supply
- 32: control circuit
- 33: motor
- 41: battery
- 42: relay circuit
- 43: DC motor
- 44: first path
- 45: second path
- 46: spare relay
- 47: release relay
- 61: switch
- 411: high potential terminal
- 412: low potential terminal
- 431: first terminal
- 432: second terminal
- 441: high potential line
- 442: low potential line
- 451: first parallel line
- 452: second parallel line
- 461: spare brake action switch
- 462: spare brake action switch
- 463: auxiliary switch
- 464: auxiliary switch
- 471: spare brake release switch
- 472: spare brake release switch

## Claims

1. A braking device (1), comprising:
a brake mechanism (2) that presses a friction material (21) against a braking target member of a railroad vehicle to brake the railroad vehicle;
a spare electric motor (43) that drives the brake mechanism (2) and that is different from a regular electric motor (33);
a spare power supply (41) that supplies electricity to the spare electric motor (43) and that is different from a regular power supply (31); and
an electricity supply controller (42, 61) that controls supply of electricity from the spare power supply (41) to the spare electric motor (43) in response to a spare brake command;
**characterized in that**
the regular electric motor (33) drives the friction material (21) based on alternating-current (AC) electricity, and
the braking device (1) further comprises an inverter that generates AC electricity to be applied to the regular electric motor (33) based on electricity supplied from the regular power supply (31).

2. The braking device (1) according to claim 1, wherein
the spare power supply (41) is a direct-current (DC) power supply that supplies DC electricity,
the spare electric motor (43) is a DC electric motor that drives the brake mechanism (2) based on the DC electricity, and
the electricity supply controller (42, 61) is a relay circuit (42) that switches a path between the DC power supply (41) and the DC electric motor (43) in response to the spare brake command.

3. The braking device (1) according to claim 2, wherein the relay circuit (42) comprises:
a brake action switch (461, 462) that is provided on a first path (44) connecting the DC power supply (41) and the DC electric motor (43) and that is closed in response to the spare brake command, thereby applying a direct current in a first direction to the DC electric motor (43) and pressing the friction material (21) against the braking target member; and
a brake release switch (471, 472) that is provided on a second path (45) connecting the DC power supply (41) and the DC electric motor (43) in parallel with the first path (44) and that is closed in response to a brake release command, thereby applying, when the spare brake command is not given to the brake action switch (461, 462), a direct current in a second direction, opposite to the first direction, to the DC electric motor (43) and driving the friction material (21) to a brake release position.

4. The braking device (1) according to claim 3, wherein, when the regular electric motor (33) and the regular power supply (31) are functioning, the brake action switch (461, 462) is not given the spare brake command and is open, and the brake release switch (471, 472) is not given the brake release command and is open.

5. The braking device (1) according to claim 3 or 4, wherein the relay circuit (42) comprises an auxiliary switch (463, 464) that is provided in series with the brake release switch on the second path (45) and that is opened in response to the spare brake command.

6. The braking device (1) according to any one of claims 3 through 5, wherein
the first path (44) comprises a high potential line (441) connected to a high potential terminal (411) of the DC power supply, and a low potential line (442) connected to a low potential terminal (412) of the DC power supply, and
the second path (45) comprises a first parallel line (451) that is connected to the high potential line (441) on the DC power supply side with respect to the brake action switch (461, 462) and the brake release switch (471, 472) and that is also connected to the low potential line (442) on the DC electric motor side with respect to the brake action switch (461, 462) and the brake release switch (471, 472), and a second parallel line (452) that is connected to the low potential line (442) on the DC power supply side with respect to the brake action switch (461, 462) and the brake release switch (471, 472) and that is also connected to the high potential line (441) on the DC electric motor side with respect to the brake action switch (461, 462) and the brake release switch (471, 472).

7. The braking device (1) according to any one of claims 1 through 6, wherein at least one of the spare electric motor (43), the spare power supply (41), or the electricity supply controller (42, 61) is attachable to and detachable from the braking device (1).

8. The braking device (1) according to claim 7, wherein the spare power supply (41) and the electricity supply controller (42, 61) are attachable to and detachable from the braking device (1) provided with the spare electric motor (43).

9. The braking device (1) according to any one of claims 1 through 8, wherein the inverter and the electricity supply controller (42, 61) are configured with different circuit boards.

10. The braking device (1) according to any one of claims 1 through 9, wherein the inverter and the electricity supply controller (42, 61) are housed in different casings.

## Patentansprüche

1. Bremsvorrichtung (1), die umfasst:
einen Bremsmechanismus (2), der ein Reibungsmaterial (21) an ein Brems-Zielelement eines Schienenfahrzeugs presst, um das Schienenfahrzeug zu bremsen;
einen Zusatz-Elektromotor (43), der den Bremsmechanismus (2) antreibt und der sich von einem regulären Elektromotor (33) unterscheidet;
eine Zusatz-Stromquelle (41), die dem Zusatz-Elektromotor (43) Strom zuführt und die sich von einer regulären Stromquelle (31) unterscheidet; sowie
eine Stromzufuhr-Steuerungseinrichtung (42, 61), die in Reaktion auf einen Zusatz-Bremsbefehl Zufuhr von Strom von der Zusatz-Stromquelle (41) zu dem Zusatz-Elektromotor (43) steuert;
**dadurch gekennzeichnet, dass**
der reguläre Elektromotor (33) das Reibungsmaterial (21) auf Basis von Wechselstrom (AC) antreibt, und
die Bremsvorrichtung (1) des Weiteren einen Wechselrichter umfasst, der an den regulären Elektromotor (33) anzulegenden Wechselstrom auf Basis von der regulären Stromquelle (31) zugeführtem Strom erzeugt.

2. Bremsvorrichtung (1) nach Anspruch 1, wobei
die Zusatz-Stromquelle (41) eine Gleichstromquelle (DC) ist, die Gleichstrom zuführt,
der Zusatz-Elektromotor (43) ein Gleichstrommotor ist, der den Bremsmechanismus (2) auf Basis des Gleichstroms antreibt, und
die Stromzufuhr-Steuerungseinrichtung (42, 61) eine Relaisschaltung (42) ist, die einen Weg zwischen der Gleichstromquelle (41) und dem Gleichstrom-Elektromotor (43) in Reaktion auf den Zusatz-Bremsbefehl umschaltet.

3. Bremsvorrichtung (1) nach Anspruch 2, wobei die Relaisschaltung (42) umfasst:
einen Bremswirkungs-Schalter (461, 462), der auf einem ersten Weg (44) vorhanden ist, der die Gleichstromquelle (41) und den Gleichstrom-Elektromotor (43) verbindet und der in Reaktion auf den Zusatz-Bremsbefehl geschlossen wird, so einen Gleichstrom in einer ersten Richtung an den Gleichstrom-Elektromotor (43) anlegt und das Reibungsmaterial (21) an das Brems-Zielelement presst; sowie
einen Brems-Löseschalter (471, 472), der auf einem zweiten Weg (45) vorhanden ist, der die Gleichstromquelle (41) und den Gleichstrom-Elektromotor (43) parallel zu dem ersten Weg (44) verbindet, und der in Reaktion auf einen Brems-Lösebefehl geschlossen wird und so, wenn der Zusatz--Bremsbefehl dem Bremswirkungs-Schalter (461,62) nicht erteilt wird, einen Gleichstrom in einer zweiten Richtung entgegengesetzt zu der ersten Richtung an den Gleichstrom-Elektromotor (43) anlegt und das Reibungsmaterial (21) an eine Brems-Löseposition antreibt.

4. Bremsvorrichtung (1) nach Anspruch 3, wobei, wenn der reguläre Elektromotor (33) und die reguläre Stromquelle (31) funktionieren, der Bremswirkungs-Schalter (461, 462) den der Zusatz-Bremsbefehl nicht erhält und geöffnet ist, und der Brems-Löseschalter (471, 472) den Brems-Lösebefehl nicht erhält und geöffnet ist.

5. Bremsvorrichtung (1) nach Anspruch 3 oder 4, wobei die Relaisschaltung (42) einen Hilfsschalter (463, 464) umfasst, der sich in Reihe mit dem Brems-Löseschalter auf dem zweiten Weg (42) befindet und der in Reaktion auf den Zusatz-Bremsbefehl geöffnet wird.

6. Bremsvorrichtung (1) nach einem der Ansprüche 3 bis 5, wobei
der erste Weg (44) eine Hochpotential-Leitung (441), die mit einem Hochpotential-Anschluss (411) der Gleichstromquelle verbunden ist, sowie eine Niedrigpotential-Leitung (442) umfasst, die mit einem Niedrigpotential-Anschluss (412) der Gleichstromquelle verbunden ist, und
der zweite Weg (45) eine erste Parallelleitung (451), die mit der Hochpotential-Leitung (441) an der Seite der Gleichstromquelle in Bezug auf den Bremswirkungs-Schalter (461, 462) und den Brems-Löseschalter (471, 472) verbunden ist und die des Weiteren mit der Niedrigpotential-Leitung (442) an der Seite des Gleichstrom-Elektromotors in Bezug auf den Bremswirkungs-Schalter (461, 462) sowie den Brems-Löseschalter (471, 472) verbunden ist, sowie eine zweite Parallelleitung (452) umfasst, die mit der Niedrigpotential-Leitung (141) an der Seite der Gleichstromquelle in Bezug auf den Bremswirkungs-Schalter (461, 462) und den Brems-Löseschalter (471, 472) verbunden ist und die des Weiteren mit der Niedrigpotential-Leitung (441) an der Seite des Gleichstrom-Elektromotors in Bezug auf den Bremswirkungs-Schalter (461, 462) sowie den Brems-Löseschalter (471, 472) verbunden ist.

7. Bremsvorrichtung (1) nach einem der Ansprüche 1 bis 6, wobei der Zusatz-Elektromotor (43) oder/und die Zusatz-Stromquelle (41) oder die Stromzufuhr-Steuerungseinrichtung (42, 61) an der Bremsvorrichtung (1) angebracht und von ihr gelöst werden kann/können.

8. Bremsvorrichtung (1) nach Anspruch 7, wobei die Zusatz-Stromquelle (41) und die Stromzufuhr-Steuerungseinrichtung (43, 61) an der mit dem Zusatz-Elektromotor (43) versehenen Bremsvorrichtung (1) angebracht und von ihr gelöst werden können.

9. Bremsvorrichtung (1) nach einem der Ansprüche 1 bis 8, wobei der Wechselrichter und die Stromzufuhr-Steuerungseinrichtung (42, 61) mit unterschiedlichen Leiterplatten ausgeführt sind.

10. Bremsvorrichtung (1) nach einem der Ansprüche 1 bis 9, wobei der Wechselrichter und die Stromzufuhr-Steuerungseinrichtung (42, 61) in verschiedenen Gehäusen aufgenommen sind.

## Revendications

1. Dispositif de freinage (1) comprenant :
un mécanisme de frein (2) qui presse un matériau de friction (21) contre un élément formant cible de freinage d'un véhicule sur rail afin de freiner le véhicule sur rail,
un moteur électrique de secours (43) qui entraîne le mécanisme de frein (2) et qui est différent du moteur électrique ordinaire (33),
une alimentation de secours (41) qui délivre de l'électricité au moteur électrique de secours (43) et qui est différente de l'alimentation ordinaire (31), et
un contrôleur de fourniture d'électricité (42, 61) qui pilote la fourniture d'électricité à partir de l'alimentation de secours (41) jusqu'au moteur électrique de secours (43) en réponse à une commande de frein de secours,
**caractérisé en ce que** :
le moteur électrique ordinaire (33) entraîne le matériau de friction (21) sur la base d'une électricité en courant alternatif (AC), et
le dispositif de freinage (1) comprend en outre un onduleur qui génère de l'électricité en courant alternatif à appliquer sur le moteur électrique ordinaire (33) sur la base de l'électricité délivrée par l'alimentation ordinaire (31) .

2. Dispositif de freinage (1) selon la revendication 1, dans lequel :
l'alimentation de secours (41) est une alimentation en courant continu (DC) qui délivre de l'électricité en courant continu,
le moteur électrique de secours (43) est un moteur électrique à courant continu qui entraîne le mécanisme de frein (2) sur la base de l'électricité en courant continu, et
le contrôleur de fourniture d'électricité (42, 61) est un circuit relais (42) qui commute une ligne entre l'alimentation en courant continu (41) et le moteur électrique en courant continu (43) en réponse à la commande de frein de secours.

3. Dispositif de freinage (1) selon la revendication 2, dans lequel le circuit relais (42) comprend :
un commutateur d'action de freinage (461, 462) qui est disposé sur une première ligne (44) reliant l'alimentation en courant continu (41) et le moteur électrique en courant continu (43) et qui est fermé en réponse à la commande de frein de secours, appliquant ainsi un courant continu dans un premier sens sur le moteur électrique en courant continu (43) et en pressant le matériau de friction (21) contre l'élément formant cible de freinage, et
un commutateur de relâchement de freinage (471, 472) qui est disposé sur une seconde ligne (45) reliant l'alimentation en courant continu (41) et le moteur électrique en courant continu (43) parallèlement à la première ligne (44) et qui est fermé en réponse à une commande de relâchement de frein, appliquant ainsi au moteur électrique en courant continu (43), lorsque la commande de frein de secours n'est pas fournie au commutateur d'action de freinage (461, 462), un courant continu dans un second sens opposé au premier sens et entraînant le matériau de friction (21) vers une position de relâchement de frein.

4. Dispositif de freinage (1) selon la revendication 3, dans lequel, lorsque le moteur électrique ordinaire (33) et l'alimentation ordinaire (31) sont en fonctionnement, le commutateur d'action de freinage (461, 462) ne reçoit pas la commande de frein de secours et est ouvert, et le commutateur de relâchement de freinage (471, 472) ne reçoit pas la commande de relâchement de frein et est ouvert.

5. Dispositif de freinage (1) selon la revendication 3 ou la revendication 4, dans lequel le circuit relais (42) comprend un commutateur auxiliaire (463, 464) qui est disposé en série avec le commutateur de relâchement de freinage sur la seconde ligne (45) et qui est ouvert en réponse à la commande de frein de secours.

6. Dispositif de freinage (1) selon l'une quelconque des revendications 3 à 5, dans lequel :
la première ligne (44) comprend une ligne haute tension (441) reliée à une borne haute tension (411) de l'alimentation en courant continu, ainsi qu'une ligne basse tension (442) reliée à une borne basse tension (412) de l'alimentation en courant continu, et
la seconde ligne (45) comprend une première ligne parallèle (451) qui est reliée à la ligne haute tension (441) du côté de l'alimentation en courant continu par rapport au commutateur d'action de freinage (461, 462) et au commutateur de relâchement de freinage (471, 472) et qui est également reliée à la ligne basse tension (442) du côté du moteur électrique en courant continu par rapport au commutateur d'action de freinage (461, 462) et au commutateur de relâchement de freinage (471, 472), ainsi qu'une seconde ligne parallèle (452) qui est reliée à la ligne basse tension (442) du côté de l'alimentation en courant continu par rapport au commutateur d'action de freinage (461, 462) et au commutateur de relâchement de freinage (471, 472) et qui est également reliée à la ligne haute tension (441) du côté du moteur électrique en courant continu par rapport au commutateur d'action de freinage (461, 462) et au commutateur de relâchement de freinage (471, 472).

7. Dispositif de freinage (1) selon l'une quelconque des revendications 1 à 6, dans lequel au moins l'un parmi le moteur électrique de secours (43), l'alimentation de secours (41) ou le contrôleur de fourniture d'électricité (42, 61) peut être fixé au dispositif de freinage (1) et démonté de celui-ci.

8. Dispositif de freinage (1) selon la revendication 7, dans lequel l'alimentation de secours (41) et le contrôleur de fourniture d'électricité (42, 61) peuvent être fixés au dispositif de freinage (1) muni du moteur électrique de secours (43) et démontés de celui-ci.

9. Dispositif de freinage (1) selon l'une quelconque des revendications 1 à 8, dans lequel l'onduleur et le contrôleur de fourniture d'électricité (42, 61) sont configurés avec des cartes à circuit imprimé différentes.

10. Dispositif de freinage (1) selon l'une quelconque des revendications 1 à 9, dans lequel l'onduleur et le contrôleur de fourniture d'électricité (42, 61) sont logés dans des boîtiers différents.
